# EUROPÄISCHE PATENTSCHRIFT

(11) **EP 3 405 962 B1**
(45) Veröffentlichungstag und Bekanntmachung des Hinweises auf die Patenterteilung: **04.03.2020**
(21) Anmeldenummer: 17702547.5
(22) Anmeldetag: 20.01.2017
(51) Int. Cl.: H01B 3/16, H01B 3/24, H02B 13/055, H01H 33/56, C08F 210/12, C08L 23/16, C08L 23/22

(54) **VORRICHTUNG ZUR ERZEUGUNG, ÜBERTRAGUNG, VERTEILUNG UND/ODER VERWENDUNG ELEKTRISCHER ENERGIE ODER EINE KOMPONENTE EINER SOLCHEN VORRICHTUNG SOWIE GASDICHTUNG FÜR EINE SOLCHE VORRICHTUNG ODER KOMPONENTE**
DEVICE FOR THE GENERATION, TRANSMISSION, DISTRIBUTION AND/OR USE OF ELECTRICAL ENERGY OR COMPONENT OF SUCH A DEVICE AND GAS SEAL FOR SUCH A DEVICE OR COMPONENT
DISPOSITIF DE PRODUCTION, DE TRANSMISSION, DE DISTRIBUTION ET/OU D'UTILISATION D'ÉNERGIE ÉLECTRIQUE, OU COMPOSANT D'UN DISPOSITIF DE CE TYPE AINSI QUE JOINT D'ÉTANCHÉITÉ POUR UN DISPOSITIF OU COMPOSANT DE CE TYPE

(30) Priorität: 21.01.2016 DE 202016100268 U
(43) Veröffentlichungstag der Anmeldung: 28.11.2018
(73) Patentinhaber: ABB Schweiz AG, 5400 Baden (CH)
(72) Erfinder: DI GIANNI, Anna, 5405 Dättwil (CH); TEHLAR, Denis, 8050 Zürich (CH); MEIER, Patrick P., 5603 Staufen (CH); ASCHWANDEN, Pia, 6410 Goldau (CH); GASPARINI, Rico, 5408 Ennetbaden (CH)
(74) Vertreter: Zimmermann & Partner Patentanwälte mbB
(86) Internationale Anmeldenummer: PCT/EP2017/051163
(87) Internationale Veröffentlichungsnummer: WO 2017/125536

(56) Entgegenhaltungen:
- EP-A1- 2 284 854
- EP-B1- 2 652 752
- US-B2- 8 492 672
- DATABASE WPI Week 200575 Thomson Scientific, London, GB; AN 2005-728438 XP002769332, & JP 2005 269684 A (CHUBU DENRYOKU KK) 29. September 2005 (2005-09-29)
- DATABASE WPI Week 200377 Thomson Scientific, London, GB; AN 2003-818984 XP002771431, & JP 2003 169411 A (MEIDENSHA CORP) 13. Juni 2003 (2003-06-13)

## Beschreibung

Die vorliegende Erfindung betrifft eine Vorrichtung zur Erzeugung, Übertragung, Verteilung und/oder Verwendung von elektrischer Energie oder eine Komponente davon, sowie eine Gasdichtung für eine solche Vorrichtung bzw. Komponente.

In Vorrichtungen der eingangs genannten Art werden häufig flüssige oder gasförmige dielektrische Isolationsmedien für die dielektrische Isolation der stromführenden Komponente eingesetzt. Unter anderem finden solche Isolationsmedien in gasisolierten Schaltanlage (GIS), gasisolierten Rohrleitern (GIL) oder Transformatoren standardmässig Anwendung. So wird beispielsweise in metallgekapselten GIS die stromführende Komponente in einem Gehäuse angeordnet, welches einen Isolationsraum begrenzt, in dem ein Isolationsgas enthalten ist, um das Gehäuse von der stromführenden Komponenten zu isolieren und derart einen elektrischen Durchschlag zu verhindern.

Zur Stromunterbrechung in Hochspannungsschaltanlagen übernimmt das Isolationsgas zudem die Funktion eines Lichtbogenlöschgases.

US 8 492 672 offenbart einen Ableiter zur Lichtbogenlöschung mittels einer beweglichen Elektrode. Im Bereitsschaftszustand ist ein Isolationsraum zwischen feststehender und beweglicher Elektrode mit einer Isolationsflüssigkeit oder mit einem Isolationsgas aus SF₆, Druckluft, N₂, Perfluor- oder Fluor-Chlor-Karbonverbindungen gefüllt und gegebenenfalls mit einer grossflächigen, membranartigen Feststoffisolation z.B. aus Butylkautschuk isoliert. Die membranartige Feststoffisolation is so ausgelegt, dass sie bei Aktivierung des Ableiters von der beweglichen Elektrode durchschlagen werden kann.

EP 2 284 854 offenbart eine gasisolierte Schaltanlage, die mit Lichtbogenlöschgas aus SF₆, Luft, N₂, CO₂, O₂, H₂, oder Perfluoro- oder Hydrofluor-Karbonverbindungen betrieben wird. Probleme mit der Gasdichtigkeit bei Verwendung von H₂ oder CO₂ werden dadurch gelöst, dass ein grösseres Bauvolumen mit mehr Gasvorrat bei etwas längerer Gasdichtung oder doppelt dicke Gasdichtungen gewählt werden oder dass H₂ durch das weniger diffusionsfreudige CH₄ ersetzt wird. Als Dichtungsmaterialien werden Nitrilkautschuk, Fluorkautschuk, Silikonkautschuk, Akrylkautschuk, Äthylen-Propylen-Kautschuk, Äthylen-Propylen-Diene-Kautschuk (EPDM), Butylkautschuk, Urethankautschuk, Hypalon oder Äthylenvinylacetat-Harz vorgeschlagen.

WO 2008/073790 offenbart Isolationsgase für gasisolierte Schaltanlagen mit Siedepunkten tiefer als -20°C, darunter diverse Fluoräther, ein Fluormonoketone mit 3 Kohlenstoffatomen, ein Fluordiketon mit 4 Kohlenstoffatomen, diverse Fluorolefine, und spezielle Fluornitrile mit 1 oder 2 oder 3 Kohlenstoffatomen.

Als Isolationsgas bzw. Lichtbogenlöschgas wird häufig Schwefelhexafluorid (SF₆) verwendet, welches nicht nur äusserst gute dielektrische Eigenschaften aufweist, sondern im Übrigen auch chemisch praktisch inert und nicht entflammbar ist.

Allerdings sind in jüngerer Vergangenheit Organofluorverbindungen als interessante Alternativen zu SF₆ vorgeschlagen worden. Diese Organofluorverbindungen weisen ein äusserst geringes Treibhauspotential (Global Warming Potential; GWP) auf und ein Ozonabbaupotential (Ozone Depletion Potential; ODP) von 0.

So wird etwa in WO 2010/142346 ein dielektrisches Isolationsmedium offenbart, welches ein 4 bis 12 Kohlenstoffatome aufweisendes Fluorketon enthält. Weiter wird in WO 2012/080246 ein exakt 5 Kohlenstoffatome aufweisendes Fluorketon (im Folgenden: "C5K") offenbart, welches in einer Mischung mit einer sich von dem C5K unterscheidenden Isolationsgaskomponente vorliegt.

Es hat sich gezeigt, dass Fluorketone aussergewöhnlich gute Isolationseigenschaften aufweisen. Insbesondere verfügen sie über eine hohe dielektrische Festigkeit und sind zudem für die Löschung von Lichtbögen geeignet. Gleichzeitig weisen sie eine sehr niedrige Toxizität auf. Weiter haben sich Mischungen als besonders vorteilhaft erwiesen, in denen das Fluorketon zusammen mit O₂, N₂ und/oder CO₂ als Trägergas (oder "Hintergrundgas") vorliegt. Allerdings weisen die als SF₆-Alternative in Frage kommenden Fluorketone einen relativ hohen Siedepunkt auf. Der Partialdruck der Fluorketone ist bei Betriebsbedingungen der Vorrichtung somit relativ gering.

Um eine ausreichend gute dielektrische Isolation zu erhalten, wird daher eine relativ hohe Gasdichte der Fluorketonenthaltenden Gasmischungen gewählt. Dies wiederum bedingt, dass das Gehäuse, welches den Isolationsraum begrenzt, einem relativ hohen Druck standhalten können muss, bzw. dass auch bei relativ hohem Druck im Isolationsraum ein Entweichen des Isolationsgases wirksam verhindert werden kann.

Um ein Entweichen des Isolationsgases zu verhindern, werden üblicherweise Gasdichtungen wie z.B. Dichtringe eingesetzt.

Mit diesen soll insbesondere an Grenzflächen eine Abdichtung des Isolationsraums von einem anderen Raum, insbesondere von der Umgebung der Vorrichtung, erzielt werden. Würde eine solche Abdichtung nicht gewährleistet werden können, müssten die Intervalle für die Wartung der Vorrichtung, und insbesondere für das Wiederherstellen der gewünschten Isolationsgaszusammensetzung, verkürzt werden, d.h. dass die Vorrichtung frühzeitig abgestellt werden müsste, um wenigstens einen Teil des Isolationsgases zu ersetzen, was offensichtlich nachteilig ist.

Als Material für eine Gasdichtung kommt prinzipiell etwa EPDM in Frage, welches im Zusammenhang mit SF₆ in Hochspannungsanlagen als Dichtungsmaterial der Wahl beschrieben wird. Allerdings wurde festgestellt, dass Elastomere in der Regel eine relativ hohe Gaspermeabilität aufweisen. Insbesondere weisen EPDM-Dichtungen trotz den ansonsten hervorragenden Eigenschaften bei dem erwähnten hohen Druck eine relativ hohe Permeabilität gegenüber einzelnen Trägergaskomponenten, insbesondere O₂, CO₂ und N₂, auf.

Zudem hat sich gezeigt, dass Organofluorverbindungen trotz ihrer Reaktionsträgheit bis zu einem gewissen Grad mit einzelnen festen Komponenten der Vorrichtung reagieren und dabei abgebaut werden können, womit einerseits die Funktionalität des Isolationsgases direkt tangiert wird. Andererseits kann auch die genannte feste Komponente durch die Interaktion mit der Organofluorverbindung Schaden nehmen, was insbesondere dann von Relevanz ist, wenn es sich bei der festen Komponente um eine Gasdichtung handelt und diese im schadhaften Zustand eine erhöhte Leckagerate aufweist. Somit kann aufgrund der erwähnten Materialinkompatibilität die Funktionalität des Isolationsgases auch indirekt, nämlich durch ein verstärktes Ausströmen des Trägergases durch die schadhafte Gasdichtung, beeinträchtigt werden.

Aufgabe der vorliegenden Erfindung ist es somit, eine ein alternatives Isolationsmedium verwendende Vorrichtung der eingangs genannten Art zur Verfügung zu stellen, in welcher das Isolationsmedium über eine lange Periode voll funktionsfähig ist und welche somit nur relativ selten gewartet werden muss.

Insbesondere soll auch bei einem hohen Druck im Isolationsraum der Vorrichtung eine möglichst vollständige Gasabdichtung des Isolationsraums gewährleistet werden.

Im Spezifischen sollen die in der Vorrichtung vorliegenden Gasdichtungen eine hohe Materialkompatibilität mit der Organofluorverbindung aufweisen und gleichzeitig eine tiefe Permeabilität gegenüber dem in Mischung mit der Organofluorverbindung vorliegenden Trägergas zeigen, insbesondere gegenüber O₂, CO₂ und/oder N₂. Im Übrigen soll die Gasdichtung auch eine tiefe Permeabilität gegenüber Wasser haben, um zu vermeiden, dass dieses in den Isolationsraum eindringen und dort die Zersetzung des Isolationsgases oder einzelner Komponenten davon beschleunigen kann.

Die erfindungsgemässe Aufgabe wird gelöst durch den Gegenstand des Anspruchs 1. Bevorzugte Ausführungsformen sind in den abhängigen Ansprüchen wiedergegeben.

Gemäss Anspruch 1 wird im Innern der Vorrichtung zur Erzeugung, Übertragung, Verteilung und/oder Verwendung von elektrischer Energie mindestens ein Isolationsraum ausgebildet, in welchem eine elektrisch leitende Komponente angeordnet ist und welcher ein die elektrische leitende Komponente umgebendes dielektrisches Isolationsmedium enthält. Dabei enthält das Isolationsmedium
a) mindestens eine Organofluorverbindung ausgewählt aus der Gruppe bestehend aus Fluorketonen, Fluornitrilen sowie Mischungen davon und
b) ein Trägergas umfassend mindestens eine Komponente ausgewählt aus der Gruppe bestehend aus Luft, einer Luftkomponente, CO₂, oder einer Mischung dieser Komponenten.

Dieses Isolationsmedium weist eine hohe dielektrische Festigkeit auf. Das Isolationsmedium ist aufgrund seiner ausgezeichneten Lichtbogenlöschungseigenschaften im Speziellen auch für Schaltanlagen geeignet.

Gleichzeitig weist das Isolationsmedium ein äusserst geringes Treibhauspotential, ein Ozonabbaupotential von 0 und eine sehr niedrige Toxizität auf.

Zur Abdichtung des mindestens einen Isolationsraums von einem weiteren Raum umfasst die Vorrichtung erfindungsgemäss mindestens eine Gasdichtung, welche als Dichtungsmaterial Butyl-Kautschuk enthält. Im Begriff "Gasdichtung" sind damit sowohl Gasdichtungen mitumfasst, die nebst Butyl-Kautschuk weiteres Material enthalten, als auch Gasdichtungen die im Wesentlichen bzw. vollständig aus Butyl-Kautschuk bestehen.

Der "weitere Raum" im Sinne der vorliegenden Erfindung stellt in der Regel die Umgebung der Vorrichtung dar. Es ist aber denkbar, dass der weitere Raum sich auf einen Raum bzw. ein Kompartiment der Vorrichtung bezieht, gegenüber welchem der Isolationsraum mindestens annähernd hermetisch abzudichten ist.

In der Regel unterscheidet sich das im weiteren Raum enthaltene Medium vom Isolationsmedium im Isolationsraum. Im Falle, dass der weitere Raum die Umgebung der Vorrichtung darstellt, handelt es sich bei diesem Medium um Luft. Denkbar ist aber auch, dass das Medium seinerseits ein weiteres Isolationsmedium darstellt, insbesondere ein Isolationsmedium mit gegenüber Luft erhöhten dielektrischen Eigenschaften.

Es hat sich gezeigt, dass durch die erfindungsgemässe Auswahl von Butyl-Kautschuk als Dichtungsmaterial Gasdichtungen erhalten werden, die eine sehr hohe Materialkompatibilität gegenüber Organofluorverbindung aufweisen. Eine hohe Materialkompatibilität zwischen Isolationsmedium und Dichtungsmaterial ist insbesondere bei der Verwendung von 1,1,1,3,4,4,4-Heptafluoro-3-(trifluoromethyl)butan-2-on, welches hier kurz als "C5-Keton" bezeichnet wird, gegeben. C5-Keton wird, wie weiter unten ausgeführt, aufgrund seiner sich in Kombination mit einem Trägergas ergebenden dielektrischen Eigenschaften sowie seiner hohen Umweltverträglichkeit besonders bevorzugt als Organofluorverbindung verwendet. Ebenso weist die Butyl-Kautschuk Gasdichtung eine hohe Materialkompatibilität zu Isolationsgasen auf, die Fluornitril enthalten, insbesondere die Perfluorobutyronitril (C₃F₇CN) und bevorzugt Perfluoroisobutyronitril gemäss der Formel (CF₃)₂CFCN und/oder Perfluoro-2-methoxypropannitril gemäss der Formel CF₃CF(OCF₃)CN enthalten.

Die hohe Materialkompatibilität hat nicht nur den Vorteil, dass der reaktive Abbau von Organofluorverbindungen vermindert oder eliminiert werden kann. Auch die Gasdichtung weist durch die verbesserte Materialkompatibilität eine erhöhte Langzeitstabilität auf, d.h. dass selbst dann, wenn sie über eine längere Periode Organofluorverbindungen ausgesetzt sind, die Funktion nicht beeinträchtigt ist bzw. erhalten bleibt.

Im Übrigen kann durch die erfindungsgemässe Auswahl von Butyl-Kautschuk gewährleistet werden, dass die Permeabilität gegenüber dem Trägergas oder einer Trägergaskomponenten, also insbesondere gegenüber CO₂, O₂, N₂ und/oder Luft, sehr gering ist. Insbesondere ist die Permeabilität wesentlich tiefer als etwa bei der Verwendung von EPDM als Dichtungsmaterial.

Letztendlich kann erfindungsgemäss somit eine gattungsgemässe Vorrichtung mit einem Isolationsmedium auf Basis einer Organofluorverbindung erhalten werden, in welcher eine gute Gasabdichtung des das Isolationsmedium enthaltenden Raums auch bei relativ hohem Druck gewährleistet wird. Da das für die Gasabdichtung verwendete Dichtungsmaterial nicht nur eine geringe Permeabilität gegenüber dem im Isolationsmedium enthaltenen Trägergas oder einzelnen Trägergaskomponenten, sondern gleichzeitig auch eine gute Materialkompatibilität mit der Organofluorverbindung aufweist, ist ein Ersetzen des Isolationsmediums und/oder der Gasdichtung nur relativ selten erforderlich, was insgesamt zu einem wartungsarmen Betrieb der Vorrichtung beiträgt. Was die geringe Permeabilität gegenüber Wasser betrifft, so kann dadurch vermieden werden, dass Wasser in den Isolationsraum eindringen und sich an einer potentiellen Zersetzung des Isolationsgases oder Komponenten davon, insbesondere der Organofluorverbindung, beteiligen kann.

Konkret hat sich gezeigt, dass die Intervalle für das Wiederbefüllen der Vorrichtung mit Isolationsmedium erfindungsgemäss um einen Faktor von ca. 3 verlängert werden können. Da das erfindungsgemäss verwendete Dichtungsmaterial Butyl-Kautschuk gut verfügbar und relativ kostengünstig ist, fallen hierfür keine materialbedingten Mehrkosten an.

Wie erwähnt ist im Isolationsraum ein dielektrisches Isolationsmedium enthalten, welches mindestens eine Organofluorverbindung ausgewählt aus der Gruppe bestehend aus Fluorketonen, insbesondere Perfluorketonen, Fluornitrilen, insbesondere Perfluornitrilen, sowie Mischungen davon umfasst.

Die Erfindung umfasst Ausführungsformen, in welchen das Isolationsmedium entweder eine einzige Verbindung aus der Gruppe bestehend aus Fluorketonen, insbesondere Perfluorketonen, Fluornitrilen, insbesondere Perfluornitrilen, oder aber eine Mischung aus mindestens zwei Verbindungen dieser Gruppe enthält.

Das Isolationsmedium kann ein Fluorketon sein, insbesondere ein Fluorketon mit 4 bis 12 Kohlenstoffatomen.

Der Begriff "Fluorketon", wie er im Zusammenhang dieser Erfindung verwendet wird, ist breit auszulegen und umfasst insbesondere sowohl Perfluorketone als auch Hydrofluorketone und umfasst weiter gesättigte Verbindungen und ungesättigte Verbindungen, d.h. Verbindungen mit Doppel- und/oder Dreifachbindungen zwischen Kohlenstoffatomen. Die wenigstens teilweise fluorierten Alkylketten der Fluorketone können linear oder verzweigt sein oder können einen Ring bilden, welcher wahlweise mit einer oder mehreren Alkylgruppen substituiert ist. In beispielhaften Ausführungsformen ist das Fluorketon ein Perfluorketon, wobei in diesem eine verzweigte Alkylkette vorliegen kann, welche insbesondere eine wenigstens teilweise fluorierte Alkylkette sein kann und welche vorzugsweise vollständig fluoriert ist.

Gemäss einer besonders bevorzugten Ausführungsform weist das Fluorketon 5 oder 6 Kohlenstoffatome auf. Solche Fluorketone sind bis zu 500°C thermisch stabil.

Fluorketone mit genau 5 Kohlenstoffatomen werden hier kurz als Fluorketone a) bezeichnet.

Im Besonderen stellt das Fluorketon wenigstens eine Verbindung ausgewählt aus der Gruppe bestehend aus den durch die folgenden Strukturformeln definierten Verbindungen dar, in welchen wenigstens ein Wasserstoffatom durch ein Fluoratom substituiert ist:

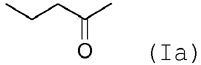

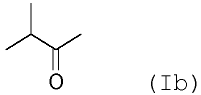

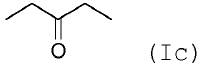

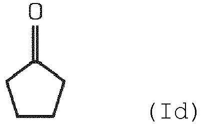

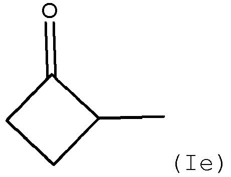

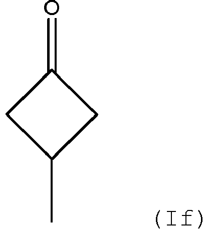

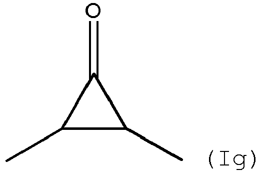

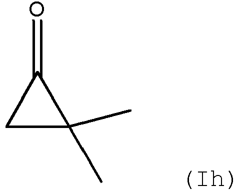

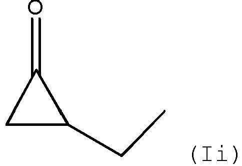

Fluorketone, insbesondere Fluorketone a), mit einer verzweigten Alkylkette sind in der Regel bevorzugt, weil ihre Siedepunkte tiefer sind als die Siedepunkte der entsprechenden Verbindungen (d.h. mit derselben Summenformel) mit einer linearen Alkylkette.

Gemäss einer besonderen Ausführungsform ist das Fluorketon a) ein Perfluorketon, spezifisch mit der Summenformel C₅F₁₀O, d.h. vollständig gesättigt, also ohne Doppel- oder Dreifachbindungen zwischen Kohlenstoffatomen. Bevorzugter ist das Fluorketon ausgewählt aus der Gruppe bestehend aus 1,1,1,3,4,4,4-Heptafluoro-3-(trifluoromethyl)butan-2-on (auch als Decafluor-2-methylbutan-3-on bezeichnet), 1,1,1,3,3,4,4,5,5,5-Decafluoropentan-2-on, 1,1,1,2,2,4,4,5,5,5-Decafluoropentan-3-on und Octafluorocylcopentanon, und ist am meisten bevorzugt 1,1,1,3,4,4,4-Heptafluoro-3-(trifluoromethyl)butan-2-on.

1,1,1,3,4,4,4-Heptafluoro-3-(trifluoromethyl)butan-2-on kann durch die folgende Strukturformel (I) dargestellt werden: 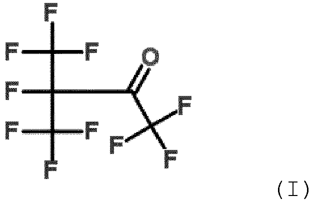 1,1,1,3,4,4,4-Heptafluoro-3-(trifluoromethyl)butan-2-on, welches hier kurz als "C5-Keton" bezeichnet wird und die Molekülformel CF₃C(O)CF(CF₃)₂ oder C₅F₁₀O aufweist, ist besonders bevorzugt hinsichtlich einer Verwendung in Hoch- und Mittelspannungsisolationsanwendungen, weil es die Vorteile einer hohen dielektrischen Festigkeit, insbesondere in Mischung mit einem dielektrischen Hintergrund- bzw. Trägergas, eines sehr tiefen GWP-Werts und eines tiefen Siedepunkts in sich vereint. Weiter weist es einen ODP (Ozone Depletion Potential)-Wert von 0 auf und ist praktisch ungiftig.

Denkbar ist zudem, dass ein Fluorketon mit genau 5 Kohlenstoffatomen gemäss obigen Ausführungen, welches hier kurz als Fluorketon a) bezeichnet wird, und ein Fluorketon mit genau 6 Kohlenstoffatomen oder genau 7 Kohlenstoffatomen, welches hier kurz als Fluorketon c) bezeichnet wird, gleichzeitig im dielektrischen Isolationsmedium enthalten sind. Somit resultiert ein Isolationsmedium mit mehr als einem Fluorketon, wobei jedes Fluorketon für sich zur dielektrischen Festigkeit des Isolationsmediums beiträgt.

Gemäss einer besonderen Ausführungsform stellt das weitere Fluorketon c) wenigstens eine Verbindung ausgewählt aus der Gruppe bestehend aus den durch die folgenden Strukturformeln definierten Verbindungen dar, in welchen wenigstens ein Wasserstoffatom durch ein Fluoratom substituiert ist: 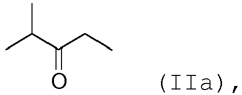 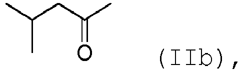 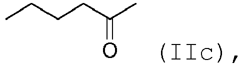 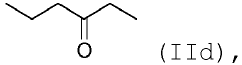 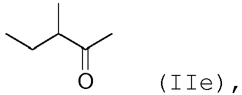 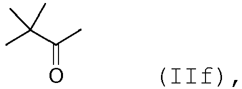 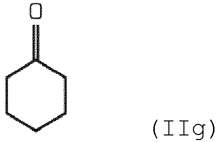 sowie allen Fluorketonen mit genau 6 Kohlenstoffatomen, in welchem die wenigstens teilweise fluorierte Alkylkette des Fluorketons einen Ring bildet, welcher mit einer oder mehreren Alkylketten substituiert ist (IIh);
und/oder wenigstens eine Verbindung ausgewählt aus der Gruppe bestehend aus den durch die folgenden Strukturformeln definierten Verbindungen, in welchen wenigstens ein Wasserstoffatom durch ein Fluoratom substituiert ist: 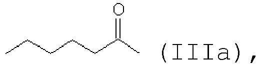 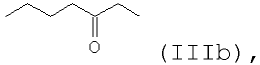 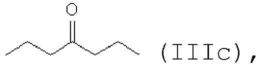 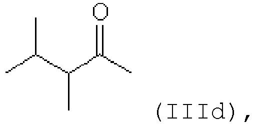 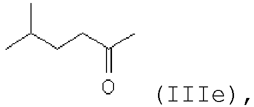 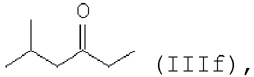 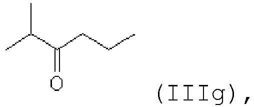 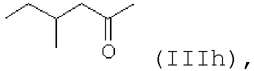 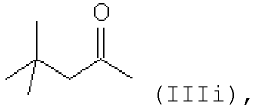 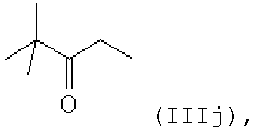 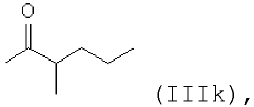 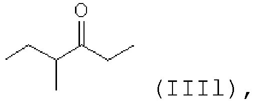 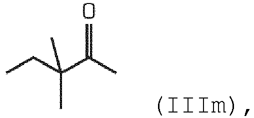 und 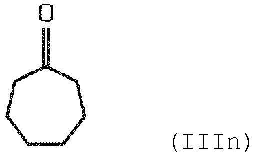 mit der Bezeichnung Dodecafluorocycloheptanon,
sowie allen Fluorketonen mit genau 7 Kohlenstoffatomen, in welchem die wenigstens teilweise fluorierte Alkylkette des Fluorketons einen Ring bildet, welcher mit einer oder mehreren Alkylketten substituiert ist (IIIo).

Die vorliegende Erfindung umfasst alle Verbindungen sowie jede Kombination von Verbindungen ausgewählt aus der Gruppe bestehend aus den Verbindungen der Strukturformeln (Ia) bis (Ii), (IIa) bis (IIh), (IIIa) bis (IIIo) und Mischungen davon.

Gemäss einer besonderen Ausführungsform ist Fluorketon c), wie Fluorketon a), ein Perfluorketon und/oder hat eine verzweigte Alkylkette, insbesondere eine wenigstens teilweise fluorierte Alkylkette, und/oder ist eine vollständig gesättigte Verbindung.

Insbesondere weist das Fluorketon c) die Summenformel C₆F₁₂O auf, d.h. stellt eine vollständig gesättigte Verbindung dar, also eine Verbindung ohne Doppel- oder Dreifachbindungen zwischen Kohlenstoffatomen.

Bevorzugt ist das Fluorketon c) ausgewählt aus der Gruppe bestehend aus 1,1,1,2,4,4,5,5,5-Nonafluoro-2-(trifluoromethyl)pentan-3-on (auch als Dodecafluoro-2-methylpentan-3-on bezeichnet), 1,1,1,3,3,4,5,5,5-Nonafluoro-4-(trifluoromethyl)pentan-2-on (auch als Dodecafluoro-4-methylpentan-2-on bezeichnet), 1,1,1,3,4,4,5,5,5-Nonafluoro-3-(trifluoromethyl)pentan-2-on (auch als Dodecafluoro-3-methylpentan-2-on bezeichnet), 1,1,1,4,4,4-Hexafluoro-3,3-bis-(trifluoromethyl)butan-2-on (auch als Dodecafluoro-3,3-(dimethyl)butan-2-on bezeichnet), Dodecafluorohexan-2-on, Dodecafluorohexan-3-on und Decafluorocyclohexanon, und stellt insbesondere das erwähnte 1,1,1,2,4,4,5,5,5-Nonafluoro-2-(trifluoromethyl)pentan-3-on.

1,1,1,2,4,4,5,5,5-Nonafluoro-2-(trifluoromethyl)pentan-3-on (auch als Dodecafluoro-2-methylpentan-3-on bezeichnet) kann durch die folgende Strukturformel (II) dargestellt werden:

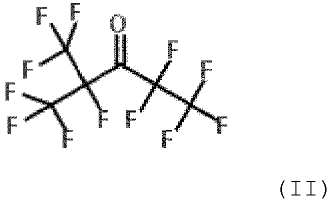

1,1,1,2,4,4,5,5,5-Nonafluoro-4-(trifluoromethyl)pentan-3-on (hier kurz als "C6-Keton" bezeichnet mit der Molekülformel C₂F₅C(O)CF(CF₃)₂) ist besonders für Hochspannungsisolationsanwendungen besonders bevorzugt wegen seiner guten isolierenden Eigenschaften und seinem extrem tiefen GWP-Wert.

Wie ebenfalls oben erwähnt, kann als Organofluorverbindung auch ein Fluoronitril verwendet werden, insbesondere ein Perfluoronitril.

Bevorzugt weist das Fluornitril, insbesondere das Perfluoronitril, vier Kohlenstoffatome auf.

Gemäss einer weiter bevorzugten Ausführungsform kann das Fluoronitril ein Perfluoroalkylnitril sein, insbesondere Perfluorobutyronitril (C₃F₇CN).

Insbesondere kann als Fluornitril Perfluoroisobutyronitril (gemäss der Formel (CF₃)₂CFCN) und/oder Perfluoro-2-methoxypropannitril (gemäss der Formel CF₃CF(OCF₃)CN) sein. Von diesen ist Perfluoroisobutyronitril aufgrund seiner geringen Toxizität besonders bevorzugt.

In generellen Ausführungsbeispielen sind solche Fluorketone und/oder Fluornitrile bevorzugt, die Siedepunkte bei Atmosphärendruck von höher (d.h. wärmer) als -5°C haben, und/oder die GWPs über 100 Jahre von weniger als 2500 haben, und/oder eine niedrige Toxizität haben.

Wie erwähnt enthält das Isolationsmedium ein Trägergas umfassend mindestens eine Komponente ausgewählt aus der Gruppe bestehend aus Luft, einer Luftkomponente, insbesondere Stickstoff (N₂) und/oder Sauerstoff (O₂), sowie Kohlendioxid (CO₂), und Mischungen davon. Besonders bevorzugt enthält das Isolationsmedium Kohlendioxid und wahlweise eine Luftkomponente, insbesondere Sauerstoff und/oder Stickstoff.

Gemäss einer besonderen Ausführungsform ist das Isolationsmedium eine Gasmischung enthaltend Kohlendioxid und Sauerstoff. Dabei liegt das Verhältnis der Menge an Kohlendioxid zur Menge an Sauerstoff vorzugsweise in einem Bereich von 50:50 bis 100:1.

Insbesondere im Hinblick auf eine Stromunterbrechung in einer Hochspannungsschaltanlage ist es besonders bevorzugt, dass das Verhältnis der Menge an Kohlendioxid zur Menge an Sauerstoff in einem Bereich von 80:20 bis 95:5 liegt, bevorzugter von 85:15 bis 92:8, noch bevorzugter von 87:13 bis weniger als 90:10, und insbesondere ca. 89:11 beträgt.

Wie erwähnt wird als Dichtungsmaterial für die Gasdichtung erfindungsgemäss Butyl-Kautschuk verwendet. Butyl-Kautschuk ist dem Fachmann auch unter der Bezeichnung IIR (Isobuten-Isopren-Kautschuk bzw. Isobuten-Isopren-Rubber) bekannt und kann insbesondere mittels folgender Strukturformel dargestellt werden: 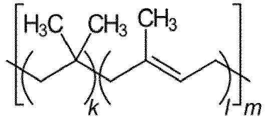 wobei k, l, m ganzzahlige Indizes sind. Im Zusammenhang mit der vorliegenden Erfindung umfasst die Bezeichnung "Butyl-Kautschuk" sowohl unmodifizierten Butyl-Kautschuk als auch modifizierten Butyl-Kautschuk, wie etwa Chlorbutyl-Kautschuk (CIIR) oder Brombutyl-Kautschuk (BIIR).

Gemäss einer bevorzugten Ausführungsform weist der Butyl-Kautschuk im Hinblick auf eine gute Vulkanisierbarkeit einen Isopren-Anteil im Bereich von 1 mol-% bis 3 mol-%, vorzugsweise von 1.5 mol-% bis 2.5 mol-%, und besonders bevorzugt von ca. 2 mol-% auf. Entsprechende Butyl-Kautschuke zeichnen sich durch eine besonders tiefe Permeabilität gegenüber dem Trägergas, insbesondere gegenüber CO₂ und/oder O₂ und/oder N₂, aus.

Der Begriff "Butyl-Kautschuk", wie er im Zusammenhang mit der vorliegenden Erfindung verwendet wird, umfasst jegliche Art von Butyl-Kautschuken, z.B. auch solche, die über Vulkanisierung mittels eines auf Schwefel oder einem Schwefeldonor basierenden Vulkanisierungssystems erhältlich sind. Besonders bevorzugt wird der Butyl-Kautschuk über Vulkanisierung mittels eines auf einem Harz basierenden Vulkanisierungssystem erhalten, da dadurch eine erhöhte Kohlenstoff-Kohlenstoff-Vernetzung erreicht werden kann. Beim Harz kann es sich dabei insbesondere um ein phenolisches Harz handeln, im Speziellen um ein Harz auf Basis eines Alkylphenol-Formaldehyd-Derivats.

Was die Dimension und die Form der Grösse der Gasdichtung betrifft, so sind alle diejenigen denkbar, die für die technische Anwendung, insbesondere die erforderlichen Dichtungs-Grössen, Dichtungs-Dicken und Dichtungs-Gasdichtigkeiten, geeignet sind.

Gemäss einer besonders bevorzugten Ausführung liegt die Gasdichtung in Form eines geschlossenen Rings mit beliebigem Querschnitt vor. Denkbar sind etwa O-Ringe, in einer Form, in der sie typischerweise für eine Innenraum-GIS oder Freiluft-GIS Verwendung finden (GIS = Gasisolierte Schaltanlage).

Nebst dem kreisförmigen Querschnitt, wie er bei den üblicherweise verwendeten O-Ringen vorliegt, sind auch andere Querschnitte denkbar, wie etwa ein X-förmiger oder ein rechteckförmiger Querschnitt. Weitere Ausführungsbeispiele sind nebst den erwähnten Gasdichtungen in konventioneller O-Ring-Form etwa auch Gasdichtungen in Form eines Doppel-O-Rings.

Für die Herstellung der Gasdichtungen sind jegliche Verfahren denkbar, die der Fachmann im konkreten Fall für geeignet erachtet. Insbesondere können die Gasdichtungen im Spritzgussverfahren hergestellt werden. Weitere Ausführungsbeispiele sind Endlos-O-Ringe oder geklebte O-Ringe.

Die vorliegende Erfindung umfasst Ausführungsformen, in der alle vorliegenden Gasdichtungen Butyl-Kautschuk als Dichtungsmaterial enthalten oder daraus bestehen, sowie Ausführungsformen, in denen dies nur für einen Teil der vorliegenden Gasdichtungen der Fall ist. Insbesondere mitumfasst sind somit auch Teile mit einer Butyl-Kautschuk-Beschichtung, mit Butyl-Kautschuk ummantelte und mit Butyl-Kautschuk umspritzte Teile.

Im Fall, dass nebst der mindestens einen Gasdichtung, welche Butyl-Kautschuk enthält, mindestens eine weitere Gasdichtung aus einem anderen Material (z.B. EPDM) vorhanden ist, kann es bevorzugt sein, die Gasdichtungen zu markieren. Dies kann etwa mittels eines sichtbaren Farbpunktes oder einer speziellen haptischen Eigenschaft geschehen. Die Markierung erlaubt es, gerade bei Verwendung von zusätzlichen Dichtungsmaterialien mit gegenüber dem Isolationsmedium optimierten Eigenschaften (beispielsweise verbesserte bzw. verringerter Permeabilität), die früher zu ersetzenden Gasdichtungen einfach zu erkennen. Mit anderen Worten kann somit vermieden werden, dass die Gasdichtungen gemäss der vorliegenden Erfindung, welche verbesserte Eigenschaften (zum Beispiel verringerte Permeabilität) aufweisen, zu einem Zeitpunkt ersetzt werden, zu dem diese noch voll funktionsfähig sind.

Prinzipiell bezieht sich die Erfindung auf jegliche Vorrichtung zur Erzeugung, Übertragung, Verteilung und/oder Verwendung von elektrischer Energie, in deren Innern mindestens ein Isolationsraum ausgebildet wird.

Gemäss einer bevorzugten Ausführungsform ist die Vorrichtung bzw. die Komponente dieser Vorrichtung
eine Schaltanlage, insbesondere eine gasisolierte metallgekapselte Schaltanlage,
ein Schalter, insbesondere ein Erdungsschalter, ein Trennschalter, ein Lasttrennschalter und/oder ein Leistungsschalter,
ein Hochspannungsleistungsschalter optional mit einer Heizkammer zum Bereitstellen eines Selbstblaseffekts,
ein Transformator, insbesondere ein Verteiltransformator oder ein Leistungstransformator,
eine elektrische drehende Maschine, ein Generator, ein Motor, ein Antrieb, ein halbleitendes Bauelement und/oder eine Leistungselektronikeinrichtung, und/oder
eine Konverterstation.

Nebst der oben genannten Vorrichtung bzw. Komponente betrifft die vorliegende Erfindung zudem eine Gasdichtung für die Vorrichtung bzw. Komponente. Diese Gasdichtung enthält wie erwähnt Butyl-Kautschuk als Dichtungsmaterial. Im Begriff "Gasdichtung" sind damit sowohl Gasdichtungen mitumfasst, die nebst Butyl-Kautschuk weiteres Material enthalten, als auch Gasdichtungen, die im Wesentlichen aus Butyl-Kautschuk bestehen.

Die Erfindung bzw. die damit erhaltene technische Wirkung wird anhand der nachfolgenden experimentellen Daten weiter veranschaulicht:
Gemäss einer ersten Versuchsanordnung wurde die Permeabilität von Butyl-Kautschuk gegenüber verschiedenen Trägergasen (CO₂ bzw. N₂) bei 20°C bestimmt. Die Resultate sind in Tabelle 1 wiedergegeben.

**Tabelle 1.**

| | **Gaspermeabilitätsrate (cm³/m²*d*bar)** | | | |
|---|---|---|---|---|
| **Material** | EPDM (Vergleichs-beispiel) | FKM (Vergleichsbeispiel) | NBR (Vergleichsbeispiel) | IIR (erfindungsgemäss) |
| CO₂; 20°C | 1473 | 1470 | 1792 | 58.3 |
| N₂; 20°C | 223 | n.n. | n.n. | 2.85 |

Wie aus den Resultaten ersichtlich ist, liegt bei 20°C die Gaspermeabilitätsrate gegenüber CO₂ für Butyl-Kautschuk (IIR) um einen Faktor von mindestens 25 tiefer liegt als für die übrigen, als Vergleichsbeispiele getesteten Kunststoffe EPDM (Äthylen-Propylen-Dien Kautschuk), FKM (Fluorkautschuk), und NBR (Nitril-Butadiene-Kautschuk).

Auch hinsichtlich der Permeabilität gegenüber N₂ als Trägergas wurden bei 20°C für Butyl-Kautschuk wesentlich tiefere Gaspermeabilitätsraten bestimmt als für EPDM. Der gegenüber der Organofluorverbindung des Isolationsmediums inerte Butyl-Kautschuk zeigt somit gegenüber den getesteten Trägergasen des Isolationsmediums eine nur sehr geringe Permeabilität und insbesondere eine bei weitem geringere Permeabilität als EPDM. Insbesondere ist die Permeabilität von Butyl-Kautschuk auch im Vergleich zu Nitrilkautschuk, welcher je nach verwendeter Organofluorverbindung eine nicht ausreichende Materialverträglichkeit zeigt, stark vermindert.

Die Erfindung wird weiter anhand der vorliegenden Figur veranschaulicht. Es zeigt:

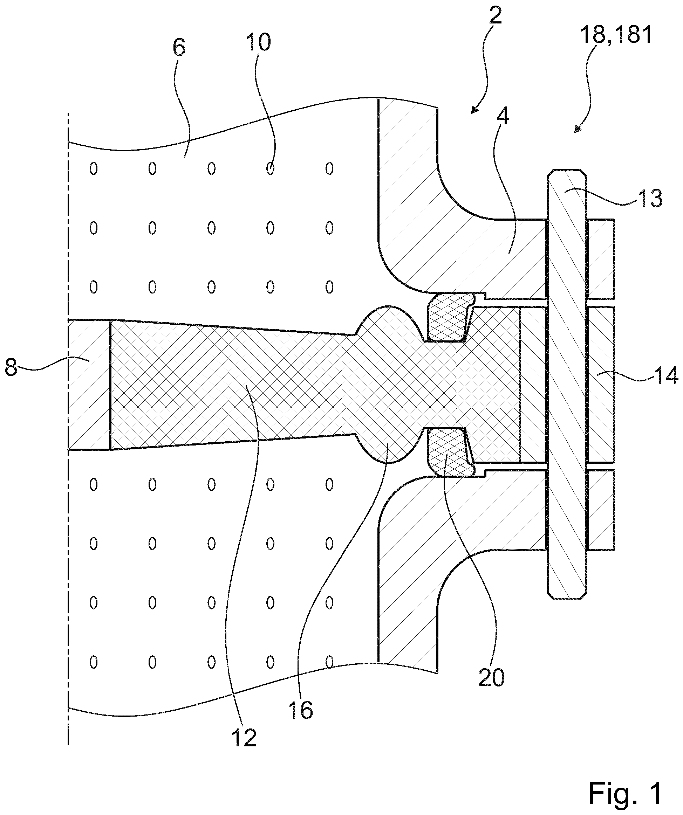

- Fig. 1: rein schematisch und in Schnittdarstellung einen Teil einer erfindungsgemässen Vorrichtung mit einer Gasdichtung zur Abdichtung eines Isolationsraums der Vorrichtung von der Umgebung der Vorrichtung.

Die in Fig. 1 gezeigte Vorrichtung 2 umfasst eine Kapselung 4, die einen Isolationsraum 6 umgibt, in welchem eine stromführende bzw. spannungsführende Komponente 8 angeordnet ist und welcher ein die stromführende bzw. spannungsführende Komponente umgebendes dielektrisches Isolationsmedium 10 enthält. Das Isolationsmedium 10 enthält zum einen eine Organofluorverbindung und zum anderen ein Trägergas, im konkreten Fall Stickstoff (N₂).

Die stromführende Komponente 8 wird über einen Isolator 12 gehalten, welcher an seinem der stromführenden Komponente 8 abgewandten Seite über einen mittels eines Spannbolzens 13 befestigten Metallring 14 mit der Kapselung 4 verbunden ist. In der konkret gezeigten Ausführungsform weist der Isolator 12 einen umlaufenden Wulst 16 zur Anbringung eines Dichtungssystems auf.

Zur Abdichtung des Isolationsraums 6 von der Umgebung 181 der Vorrichtung, welche den erfindungsgemässen "weiteren Raum" 18 definiert, ist zwischen der Kapselung 4 und dem Isolator 12 eine Gasdichtung 20 vorgesehen, welche gewährleisten soll, dass das Isolationsmedium 10 durch eine zwischen der Kapselung 4 und dem Isolator 12 bzw. dem Metallring 14 vorliegende Undichtigkeit entweichen kann, bzw. dass Luft aus der Umgebung 181 in den Isolationsraum 6 eindringen kann.

Erfindungsgemäss enthält die Gasdichtung 20 Butyl-Kautschuk als Dichtungsmaterial oder besteht die Gasdichtung 20 aus Butyl-Kautschuk als Dichtungsmaterial.

In Ausführungsbeispielen weist der Butyl-Kautschuk in der Gasdichtung 20 einen Isopren-Anteil im Bereich von 1 mol-% bis 3 mol-%, vorzugsweise von 1.5 mol-% bis 2.5 mol-%, und besonders bevorzugt von ca. 2 mol-% auf.

In weiteren Ausführungsbeispielen enthält nur ein Teil der Gasdichtung (20) Butyl-Kautschuk oder besteht daraus. Insbesondere kann die Gasdichtung 20 eine Butyl-Kautschuk-Beschichtung aufweisen oder mit Butyl-Kautschuk ummantelt sein oder mit Butyl-Kautschuk umspritzt sein.

In weiteren Ausführungsbeispielen ist neben der mindestens einen Gasdichtung 20, welche Butyl-Kautschuk enthält, mindestens eine weitere Gasdichtung (nicht dargestellt) aus einem anderen Material, insbesondere EPDM, vorhanden. Insbesondere können die Gasdichtung 20 und/oder die weitere Gasdichtung markiert sein. Bevorzugt kann die Markierung durch einen sichtbaren Farbpunkt oder durch eine spezielle haptische Eigenschaft realisiert sein.

### Referenzzeichenliste

- 2: Vorrichtung
- 4: Kapselung
- 6: Isolationsraum
- 8: stromführende Komponente, spannungsführende Komponente
- 10: Isolationsmedium, Isolationsgas
- 12: Isolator
- 13: Spannbolzen
- 14: Metallring
- 16: Wulst
- 18; 181: weiterer Raum; Umgebung; Luft
- 20: Gasdichtung

## Patentansprüche

1. Vorrichtung (2) zur Erzeugung, Übertragung, Verteilung und/oder Verwendung von elektrischer Energie oder eine Komponente einer solchen Vorrichtung (2), wobei im Innern der Vorrichtung (2) mindestens ein Isolationsraum (6) ausgebildet wird, in welchem eine stromführende Komponente (8) angeordnet ist und welcher ein die stromführende Komponente (8) umgebendes dielektrisches Isolationsmedium (10) enthält, wobei das Isolationsmedium (10)
a) mindestens eine Organofluorverbindung ausgewählt aus der Gruppe bestehend aus Fluorketonen, Fluornitrilen, und Mischungen davon und
b) ein Trägergas umfassend mindestens eine Komponente ausgewählt aus der Gruppe bestehend aus Luft, einer Luftkomponente, CO₂, oder einer Mischung dieser Komponenten enthält,
und die Vorrichtung (2) mindestens eine Gasdichtung (20) zur Abdichtung des mindestens einen Isolationsraums (6) von einem weiteren Raum (18, 181) umfasst, **dadurch gekennzeichnet, dass** die Gasdichtung (20) Butyl-Kautschuk als Dichtungsmaterial enthält und insbesondere dass die Gasdichtung (20) aus Butyl-Kautschuk als Dichtungsmaterial besteht.

2. Vorrichtung (2) bzw. Komponente nach Anspruch 1, **dadurch gekennzeichnet, dass** die Gasdichtung (20) aus Butyl-Kautschuk als Dichtungsmaterial besteht.

3. Vorrichtung (2) bzw. Komponente nach einem der vorhergehenden Ansprüche, **dadurch gekennzeichnet, dass** die Gasdichtung (20) als Dichtungsmaterial unmodifizierten Butyl-Kautschuk enthält oder daraus besteht, oder dass die Gasdichtung (20) als Dichtungsmaterial modifizierten Butyl-Kautschuk, insbesondere Chlorbutyl-Kautschuk (CIIR) oder Brombutyl-Kautschuk (BIIR), enthält oder daraus besteht.

4. Vorrichtung (2) bzw. Komponente nach einem der vorhergehenden Ansprüche, **dadurch gekennzeichnet, dass** nur ein Teil der Gasdichtung (20) Butyl-Kautschuk enthält oder daraus besteht, insbesondere dass die Gasdichtung (20) eine Butyl-Kautschuk-Beschichtung aufweist oder mit Butyl-Kautschuk ummantelt ist oder mit Butyl-Kautschuk umspritzt ist.

5. Vorrichtung (2) bzw. Komponente nach einem der vorhergehenden Ansprüche, **dadurch gekennzeichnet, dass** neben der mindestens einen Gasdichtung (20), welche Butyl-Kautschuk enthält, mindestens eine weitere Gasdichtung aus einem anderen Material, insbesondere EPDM, vorhanden ist, insbesondere dass die Gasdichtung (20) und/oder die weitere Gasdichtung markiert sind, bevorzugt durch einen sichtbaren Farbpunkt oder eine spezielle haptische Eigenschaft markiert sind.

6. Vorrichtung (2) bzw. Komponente nach einem der vorhergehenden Ansprüche, **dadurch gekennzeichnet, dass** der Butyl-Kautschuk einen Isopren-Anteil im Bereich von 1 mol-% bis 3 mol-%, vorzugsweise von 1.5 mol-% bis 2.5 mol-%, und besonders bevorzugt von ca. 2 mol-% enthält.

7. Vorrichtung (2) bzw. Komponente nach einem der vorhergehenden Ansprüche, **dadurch gekennzeichnet, dass** die Gasdichtung (20) die Form eines geschlossenen Rings hat, und/oder dass die Gasdichtung (20) einen O-förmigen oder X-förmigen oder rechteckförmigen oder doppelt-O-förmigen Querschnitt hat.

8. Vorrichtung (2) bzw. Komponente nach einem der vorhergehenden Ansprüche, **dadurch gekennzeichnet, dass** das Fluorketon ein Perfluorketon ist und gewählt ist aus der Gruppe bestehend aus: den Fluorketonen mit genau 5 Kohlenstoffatomen, den Fluorketonen mit genau 6 Kohlenstoffatomen, den Fluorketonen mit genau 7 Kohlenstoffatomen, und Mischungen davon, und insbesondere dass das Fluoroketon 5 oder 6 Kohlenstoffatome aufweist.

9. Vorrichtung (2) bzw. Komponente nach einem der vorhergehenden Ansprüche, **dadurch gekennzeichnet dass** das Fluorketon ein Perfluorketon mit der Summenformel C₅F₁₀O umfasst oder ist [, und insbesondere dass das Fluorketone die Molekülformel CF₃C(O)CF(CF₃)₂ aufweist.

10. Vorrichtung (2) bzw. Komponente nach einem der vorhergehenden Ansprüche, **dadurch gekennzeichnet, dass** das Fluornitril ein Perfluornitril ist, das vier Kohlenstoffatome aufweist, und insbesondere dass das Fluornitril Perfluorobutyronitril (C₃F₇CN) ist.

11. Vorrichtung (2) bzw. Komponente nach einem der vorhergehenden Ansprüche, **dadurch gekennzeichnet, dass** das Fluoronitril Perfluoroisobutyronitril gemäss der Formel (CF₃)₂CFCN und/oder Perfluoro-2-methoxypropannitril gemäss der Formel CF₃CF(OCF₃)CN ist.

12. Vorrichtung (2) bzw. Komponente nach einem der vorhergehenden Ansprüche, **dadurch gekennzeichnet, dass** das im weiteren Raum enthaltene Medium sich vom Isolationsmedium (10) im Isolationsraum (6) unterscheidet.

13. Vorrichtung (2) bzw. Komponente nach einem der vorhergehenden Ansprüche, **dadurch gekennzeichnet, dass** die Vorrichtung (2)
eine Schaltanlage, insbesondere eine gasisolierte metallgekapselte Schaltanlage,
ein Schalter, insbesondere ein Erdungsschalter, ein Trennschalter, ein Lasttrennschalter und/oder ein Leistungsschalter,
ein Hochspannungsleistungsschalter mit einer Heizkammer zum Bereitstellen eines Selbstblaseffekts,
ein Transformator, insbesondere ein Verteiltransformator oder ein Leistungstransformator,
eine elektrische drehende Maschine, ein Generator, ein Motor, ein Antrieb, ein halbleitendes Bauelement und/oder eine Leistungselektronikeinrichtung, und/oder
eine Konverterstation ist.

## Claims

1. Device (2) for generation, transmission, distribution and/or use of electrical energy or a component of such a device (2), wherein, in at least one insulation space (6) formed within the device (2), there is disposed a current-conducting component (8), and said insulation space comprises a dielectric insulation medium (10) that surrounds the current-conducting component (8), wherein the insulation medium (10) comprises
a) at least one organofluorine compound selected from the group consisting of fluoroketones, fluoronitriles, and mixtures thereof and
b) a carrier gas comprising at least one component selected from the group consisting of air, an air component, CO₂, or a mixture of these components,
and the device (2) comprises at least one gas seal (20) for sealing off the at least one insulation space (6) from a further space (18, 181), **characterized in that** the gas seal (20) comprises butyl rubber as seal material and especially **in that** the gas seal (20) consists of butyl rubber as seal material.

2. Device (2) or component according to Claim 1, **characterized in that** the gas seal (20) consists of butyl rubber as seal material.

3. Device (2) or component according to either of the preceding claims, **characterized in that** the gas seal (20) comprises or consists of unmodified butyl rubber as seal material, or **in that** the gas seal (20) comprises or consists of modified butyl rubber, especially chlorobutyl rubber (CIIR) or bromobutyl rubber (BIIR), as seal material.

4. Device (2) or component according to any of the preceding claims, **characterized in that** only part of the gas seal (20) comprises or consists of butyl rubber, especially **in that** the gas seal (20) has a butyl rubber coating or has been ensheathed with butyl rubber or has been in-mold-coated with butyl rubber.

5. Device (2) or component according to any of the preceding claims, **characterized in that**, as well as the at least one gas seal (20) comprising butyl rubber, at least one further gas seal made of another material, especially EPDM, is present, especially **in that** the gas seal (20) and/or the further gas seal have been marked, preferably marked by a visible color dot or a specific tactile property.

6. Device (2) or component according to any of the preceding claims, **characterized in that** the butyl rubber has an isoprene content in the range from 1 mol% to 3 mol%, preferably from 1.5 mol% to 2.5 mol%, and more preferably of about 2 mol%.

7. Device (2) or component according to any of the preceding claims, **characterized in that** the gas seal (20) is in the shape of a closed ring and/or **in that** the gas seal (20) has an O-shaped or X-shaped or rectangle-shaped or double-O-shaped cross section.

8. Device (2) or component according to any of the preceding claims, **characterized in that** the fluoroketone is a perfluoroketone and is selected from the group consisting of: the fluoroketones having exactly 5 carbon atoms, the fluoroketones having exactly 6 carbon atoms, the fluoroketones having exactly 7 carbon atoms, and mixtures thereof, and especially **in that** the fluoroketone has 5 or 6 carbon atoms.

9. Device (2) or component according to any of the preceding claims, **characterized in that** the fluoroketone comprises or is a perfluoroketone having the empirical formula C₅F₁₀O, and especially in that the fluoroketone has the molecular formula CF₃C(O)CF(CF₃)₂.

10. Device (2) or component according to any of the preceding claims, **characterized in that** the fluoronitrile is a perfluoronitrile having four carbon atoms, and especially **in that** the fluoronitrile is perfluorobutyronitrile (C3F7CN).

11. Device (2) or component according to any of the preceding claims, **characterized in that** the fluoronitrile is perfluoroisobutyronitrile of the formula (CF₃)₂CFCN and/or perfluoro-2-methoxypropanenitrile of the formula CF₃CF(OCF₃)CN.

12. Device (2) or component according to any of the preceding claims, **characterized in that** the medium present in the further space differs from the insulation medium (10) in the insulation space (6).

13. Device (2) or component according to any of the preceding claims, **characterized in that** the device (2) is
a switchgear unit, especially a gas-insulated, metal-encapsulated switchgear unit,
a switch, especially a grounding switch, an isolating switch, a circuit breaker and/or a power switch,
a high-voltage power switch having a heating chamber for provision of a self-blast effect,
a transformer, especially a distribution transformer or a power transformer,
an electrical rotating machine, a generator, a motor, a drive, a semiconductive component and/or a power electronics device, and/or
a converter station.

## Revendications

1. Dispositif (2) de production, de transmission, de distribution et/ou d'utilisation d'énergie électrique ou composant d'un dispositif de ce type (2), sachant qu'à l'intérieur du dispositif (2) est réalisé au moins un espace d'isolation (6) dans lequel est disposé un composant conducteur de courant (8) et lequel contient un milieu d'isolation (10) diélectrique entourant le composant conducteur de courant (8), sachant que le milieu d'isolation (10) contient
a) au moins un composé organofluoré choisi à partir du groupe composé de fluorocétones, fluoronitriles et de mélanges de ceux-ci, et
b) un gaz porteur comprenant au moins un composant choisi à partir du groupe composé d'air, d'un composant de l'air, de CO₂, ou d'un mélange de ces composants,
et le dispositif (2) comprend au moins un joint d'étanchéité aux gaz (20) pour étanchéifier au moins un espace d'isolation (6) d'un autre espace (18, 181), **caractérisé en ce que** le joint d'étanchéité aux gaz (20) contient du caoutchouc butylique en tant que matériau de joint d'étanchéité et notamment **en ce que** le joint d'étanchéité aux gaz (20) est composé de caoutchouc butylique en tant que matériau de joint d'étanchéité.

2. Dispositif (2) ou composant selon la revendication 1, **caractérisé en ce que** le joint d'étanchéité aux gaz (20) est composé de caoutchouc butylique en tant que matériau de joint d'étanchéité.

3. Dispositif (2) ou composant selon l'une quelconque des revendications précédentes, **caractérisé en ce que** le joint d'étanchéité aux gaz (20) contient du ou est composé de caoutchouc butylique non modifié en tant que matériau de joint d'étanchéité, ou **en ce que** le joint d'étanchéité aux gaz (20) contient du ou est composé de caoutchouc butylique modifié en tant que matériau de joint d'étanchéité, notamment de caoutchouc chlorobutylique (CIIR) ou de caoutchouc de bromobutyle (BIIR).

4. Dispositif (2) ou composant selon l'une quelconque des revendications précédentes, **caractérisé en ce que** seule une partie du joint d'étanchéité aux gaz (20) contient du caoutchouc butylique ou est composée de celui-ci, notamment **en ce que** le joint d'étanchéité aux gaz (20) comporte un revêtement en caoutchouc butylique ou est enveloppé par du caoutchouc butylique ou est enrobé par injection de caoutchouc butylique.

5. Dispositif (2) ou composant selon l'une quelconque des revendications précédentes, **caractérisé en ce qu'**en plus d'au moins d'un joint d'étanchéité aux gaz (20), lequel contient du caoutchouc butylique, au moins un autre joint d'étanchéité aux gaz dans un autre matériau, notamment un mélange à base d'éthylène-propylène-diène-monomère (EPDM), est présent, notamment **en ce que** le joint d'étanchéité aux gaz (20) et/ou l'autre joint d'étanchéité aux gaz sont repérés, de préférence par un point de couleur visible ou une propriété haptique spéciale.

6. Dispositif (2) ou composant selon l'une quelconque des revendications précédentes, **caractérisé en ce que** le caoutchouc butylique contient une partie d'isoprène de l'ordre de 1 % en moles à 3 % en moles, de préférence de 1,5 % en moles à 2,5 % en moles et en particulier de préférence d'environ 2 % en moles.

7. Dispositif (2) ou composant selon l'une quelconque des revendications précédentes, **caractérisé en ce que** le joint d'étanchéité aux gaz (20) a la forme d'un anneau fermé et/ou **en ce que** le joint d'étanchéité aux gaz (20) a une section transversale en forme de O ou en forme de X ou rectangulaire ou en forme de double O.

8. Dispositif (2) ou composant selon l'une quelconque des revendications précédentes, **caractérisé en ce que** la fluorocétone est une perfluorocétone et est choisie à partir du groupe composé de : fluorocétones avec exactement 5 atomes de carbone, fluorocétones avec exactement 6 atomes de carbone, fluorocétones avec exactement 7 atomes de carbone et de mélanges de celles-ci et notamment **en ce que** la fluorocétone comporte 5 ou 6 atomes de carbone.

9. Dispositif (2) ou composant selon l'une quelconque des revendications précédentes, **caractérisé en ce que** la fluorocétone comprend ou est une perfluorocétone avec la formule brute C₅F₁₀O et notamment **en ce que** la fluorocétone comporte la formule moléculaire CF₃C(O)CF(CF₃)₂.

10. Dispositif (2) ou composant selon l'une quelconque des revendications précédentes, **caractérisé en ce que** le fluoronitrile est un perfluoronitrile, qui comporte quatre atomes de carbone et notamment **en ce que** le fluoronitrile est un perfluorobutyronitrile (C₃F₇CN).

11. Dispositif (2) ou composant selon l'une quelconque des revendications précédentes, **caractérisé en ce que** le fluoronitrile est un perfluoroisobutyronitrile selon la formule (CF₃)₂CFCN et/ou un perfluoro-2-méthoxypropannitrile selon la formule CF₃CF(OCF₃)CN.

12. Dispositif (2) ou composant selon l'une quelconque des revendications précédentes, **caractérisé en ce que** le milieu contenu dans l'autre espace est différent du milieu d'isolation (10) dans l'espace d'isolation (6).

13. Dispositif (2) ou composant selon l'une quelconque des revendications précédentes, **caractérisé en ce que** le dispositif (2) est
une installation de commutation, notamment une installation de commutation à capsulage métallique isolée des gaz,
un contacteur, notamment un interrupteur de mise à la terre, un sectionneur, un sectionneur de charge et/ou un interrupteur de puissance,
un interrupteur de puissance à haute tension avec une chambre de chauffe pour la fourniture d'un effet d'autosoufflage,
un transformateur, notamment un transformateur de distribution ou un transformateur de puissance,
une machine rotative électrique, un générateur, un moteur, un système d'entraînement, un module semiconducteur et/ou un système électronique de puissance, et/ou
un poste de convertisseur.
